# EUROPÄISCHE PATENTSCHRIFT

(11) **EP 0 721 708 B1**
(45) Veröffentlichungstag und Bekanntmachung des Hinweises auf die Patenterteilung: **24.03.1999**
(21) Anmeldenummer: 94926100.2
(22) Anmeldetag: 15.09.1994
(51) Int. Cl.: H04B 10/17

(54) **OPTISCHES NACHRICHTENÜBERTRAGUNGSVERFAHREN UND ZWISCHENVERSTÄRKER HIERFÜR**
FIBRE-OPTIC COMMUNICATIONS TRANSMISSION METHOD AND INTERMEDIATE REPEATER THEREFOR
PROCEDE DE TRANSMISSION OPTIQUE DE MESSAGES ET REPETEURS INTERMEDIAIRES UTILISES A CET EFFET

(30) Priorität: 30.09.1993 DE 9320438 U; 22.06.1994 DE 4421441
(43) Veröffentlichungstag der Anmeldung: 17.07.1996
(73) Patentinhaber: ANT Nachrichtentechnik GmbH, D-71522 Backnang (DE)
(72) Erfinder: KOHN, Ulrich, D-71522 Backnang (DE); SCHEUNING, Ernst-Ulrich, D-71573 Allmersbach i.T. (DE); TISCHER, Friedrich-Christian, D-71522 Backnang (DE)
(74) Vertreter: Friedmann, Jürgen, Dr.-Ing.
(86) Internationale Anmeldenummer: DE9401063
(87) Internationale Veröffentlichungsnummer: WO9509491

(56) Entgegenhaltungen:
- US-A- 4 980 891
- PATENT ABSTRACTS OF JAPAN vol. 16, no. 52 (E-1164) 10. Februar 1992 & JP,A,03 252 232 (FUJITSU)
- IEEE PHOTONICS TECHNOLOGY LETTERS, Bd.4, Nr.7, Juli 1992, NEW YORK US Seiten 717 - 720 P.M.GABLA ET AL '1111 km, Two-Channel IM-DD Transmission Experiment at 2.5 Gb/s Through 21 In-Line Erbium-Doped Fiber Amplifiers'

## Beschreibung

Die vorliegende Erfindung betrifft ein optisches Nachrichtenübertragungsverfahren mit den Merkmalen des Oberbegriffs des Anspruchs 1 und Zwischenverstärker mit den Merkmalen der Oberbegriffe der Ansprüche 10, 11 und 12.

Aus der EP 440 276 A2 ist ein optisches Nachrichtenübertragungssystem bekannt, bei dem ein Nutzsignal mit hoher Bitrate, z.B. mehrere 100 Mbit/s, und ein Zusatzsignal mit niedriger Bitrate, z.B. weniger als 300 kbit/s, übertragen werden. Das Zusatzsignal wird bei einer Wellenlänge übertragen, die verschieden ist von der, mit der das Nutzsignal übertragen wird. In einem Zwischenverstärker wird nur das Nutzsignal mittels eines optischen Verstärkers verstärkt, das Zusatzsignal wird vor dem optischen Verstärker mittels eines Wellenlängenmultiplexers aus der Faser ausgekoppelt, optoelektrisch gewandelt, verarbeitet und nach dem Faserverstärker wieder optisch in die Faser eingekoppelt. Ein solcher Zwischenverstärker erfordert einen relativ hohen technischen Aufwand.

Aus der EP 445 364 A2 ist ein weiteres Nachrichtenübertragungssystem bekannt, bei dem Signale verschiedener Wellenlänge über eine optische Faser übertragen werden. Hier wird ebenfalls ein Signal mittels eines optischen Verstärkers verstärkt, während die anderen Signale über Wellenlängenkoppler und eine Überbrückungsleitung an dem optischen Verstärker vorbeigeführt werden.

Aus der EP 572 890 A1 und der DE 42 12 603 A1 sind optische Nachrichtenübertragungssysteme bekannt, bei denen Signale mit hoher Bitrate in Zeitmultiplexverfahren übertragen werden.

Die Aufgabe der Erfindung ist es, ein optisches Nachrichtenübertragungsverfahren und Zwischenverstärker hierfür anzugeben, die mit möglichst geringem technischem Aufwand realisierbar sind. Diese Aufgabe wird erfindungsgemäß bezogen auf das Verfahren durch die Merkmale des Anspruches 1 und bezogen auf die Zwischenverstärker durch die Merkmale der Patentansprüche 11, 13 und 14 gelöst.

Vorteilhafte Ausführungsformen gehen aus den Unteransprüchen hervor.

Für den Betrieb eines optischen Nachrichtenübertragungssystems, das Zwischenverstärker enthält, wird neben einem Nutzsignal in der Regel ein Zusatzsignal, z.B. für Überwachungs- und Ortungszwecke oder als Servicesignal, z.B. für Dienstfernsprecher, benötigt. Das Nutzsignal (NS) dient zur Übertragung der Nutzinformation und ist ein Signal relativ hoher Bitrate. Demgegenüber ist das Zusatzsignal (ZS) in der Regel ein Signal relativ niedriger Bitrate. Bei optischer Übertragung beider Signale ist es notwendig, das Nutzsignal (NS) mittels eines schmalbandigen optischen Trägersignals zu übertragen, da sonst Dispersionseffekte des Lichtwellenleiters die Reichweite des Signals begrenzen. Es wird in der Regel durch einen Lasersender erzeugt. Dagegen darf die optische Bandbreite des für die Übertragung des Zusatzsignals (ZS) benutzten optischen Trägersignals wegen der niedrigen zu übertragenden Bitrate breitbandiger sein. Es kann z.B. durch eine Luminiszenzdiode (Leuchtdiode) oder eine Superluminiszenzdiode erzeugt werden. Beide optischen Trägersignale werden über den gleichen Lichtwellenleiter übertragen, wobei dies bei Gegenrichtungsbetrieb jeweils für jede Übertragungsrichtung gilt.

Für die Übertragung des Zusatzsignals (ZS) wird ein Zeitmultiplexverfahren mit einem Rahmen und einer Anzahl von Zeitschlitzen verwendet. Dabei werden in einer Strecke mit n Zwischenverstärkern (mindestens) n Zeitschlitze vorgesehen, so daß jedem Zwischenverstärker ein Zeitschlitz zugeordnet werden kann. Die Übertragungskapazität jedes Zeitschlitzes muß dabei so groß sein, daß die Summe aller zu übertragenden Informationen aller Zwischenverstärker einer Strecke in einem einzigen Zeitschlitz übertragen werden kann. Das Zusatzsignal (ZS) wird in einem bestimmten Zwischenverstärker in einem bestimmten (davorliegenden) Zeitschlitz empfangen und ausgewertet. Die darin enthaltenen Informationen werden mit den Informationen der eigenen Station zusammengefaßt und im nächsten Zeitschlitz gesendet.

Bei Verwendung des beschriebenen Zeitmultiplexverfahrens ist es dann möglich, den optischen Sender zur Erzeugung des Trägersignals für das Zusatzsignal (ZS) vor und den optischen Empfänger zum Empfang des Zusatzsignals (ZS) hinter dem optischen Faserverstärker des Zwischenverstärkers anzukoppeln, so daß der Faserverstärker sowohl als Vorverstärker als auch als Nachverstärker für das Zusatzsignal (ZS) dient.

Beide optischen Trägersignale können also gemeinsam mittels eines einzigen optischen Faserverstärkers verstärkt werden. Durch die Bildung des beschriebenen zeitlichen Rahmens mit spezifischen Zeitschlitzen können Zwischenverstärker ohne Aufwand einzeln angesprochen werden. Vor allem jedoch wird durch das Zeitmultiplexverfahren verhindert, daß sich die gesendeten und die empfangenen Zusatzsignale in einem Zwischenverstärker gegenseitig stören.

Das Zusatzsignal (ZS) kann mit Hilfe eines einfachen optischen Kopplers, der nicht wellenlängenselektiv zu sein braucht, in die Lichtwellenleiter-Übertragungsstrecke ein- und ausgekoppelt werden.

Das eine geringe Bitrate aufweisende Zusatzsignal (ZS) kann auch bei Verwendung eines breitbandigen optischen Trägersignals in dem optischen Empfänger mit optoelektrischen Wandlern, z.B. mit einem einfachen elektrischen Tiefpaßfilter, von den hochfrequenten Spektralanteilen des eine hohe Bitrate aufweisenden Nutzsignals (NS) getrennt werden. Um das optische Trägersignal des Nutzsignals (NS) von dem optisch breitbandigen Trägerkanal des Zusatzsignals (ZS) zu trennen, ist ein optisches Filter zu verwenden.

Das optische Nachrichtenübertragungsverfahren kann vorteilhafterweise auch in Systemen angewendet werden, die mehrere optische Trägersignale mit mehreren Nutzsignalen (NS) aufweisen. Hier besteht die Möglichkeit, entweder jedem Nutzsignal (NS) ein optisch schmalbandiges Trägersignal für ein eigenes Zusatzsignal (ZS) mit Servicedaten zuzuordnen, oder ein optisch schmalbandiges oder aber das zuvor beschriebene optisch breitbandige Trägersignal für ein gemeinsames Zusatzsignal (ZS) für alle Nutzsignale vorzusehen.

Beispielhafte Ausführungsformen der Erfindung werden anhand der schematischen Zeichnungen erläutert. Es zeigen:
die Figur 1 ein optisches Nachrichtenübertragungssystem zum Übertragen eines Nutzsignals (NS) mit hoher Bitrate, das Sender und Empfänger zum Übertragen eines Zusatzsignals (ZS) enthält,
die Figur 2 einen Pulsrahmen für ein im Zeitmultiplex gesendetes Zusatzsignal (ZS) und
die Figur 3 ein Diagramm mit der Intensität als Funktion der Wellenlänge eines WDM(Wavelength Division Multiplex)-Systems.

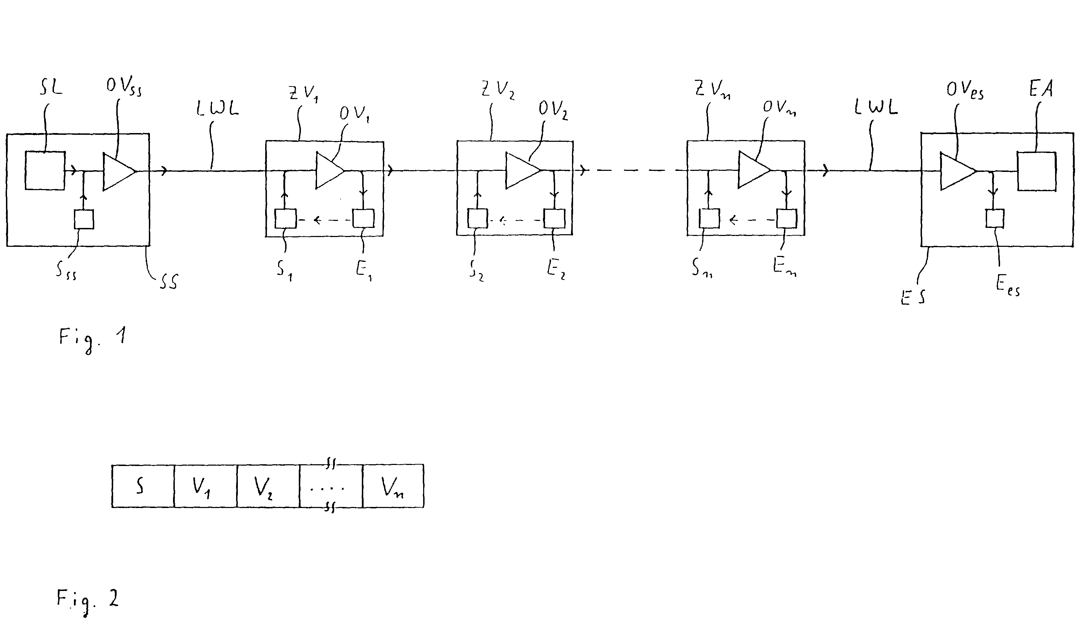

In der Figur 1 ist ein unidirektionales optisches Nachrichtenübertragungssystem mit einer Sendestation SS, einer Empfangsstation ES, einer Lichtwellenleiterstrecke LWL und optischen Zwischenverstärkern ZV₁, ZV₂, ..., ZVₙ dargestellt. In einer Sendeanordnung SL der Sendestation SS wird ein Nutzsignal (NS) hoher Bitrate, z.B. größer 100 Mbit/s, auf ein optisches schmalbandiges Trägersignal stabiler Wellenlänge aufmoduliert. Das modulierte Trägersignal wird dabei z.B. von einem Halbleiterlaser, der typischerweise eine Bandbreite kleiner 1 nm aufweist, erzeugt. Die Sendestation SS enthält außerdem einen optischen Sender Sₛₛ zum Übertragen eines Zusatzsignals (ZS) mit niedriger Bitrate, der im Vergleich zu dem optisch schmalbandigen Trägersignal des Nutzsignals (NS) optisch breitbandige Signale emittiert. Dieser optische Sender Sₛₛ ist beispielsweise eine Luminiszenz- oder eine Superluminiszenzdiode. Die durch das Zusatzsignal (ZS) übertragenen Daten können z.B. Bitraten zwischen ca. 64 kbit/s und mehreren hundert kbit/s aufweisen und enthalten Service-, Überwachungs- und Ortungsdaten. Die Trägersignale NS und ZS werden in einem Koppler der Sendestation SS zusammengefaßt und anschließend durch einen optischen Faserverstärker OVₛₛ gemeinsam verstärkt.

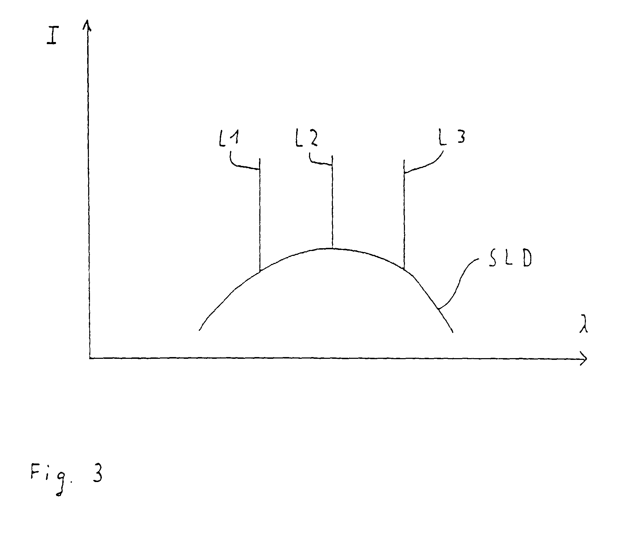

In einer Empfangsstation ES werden die auf der Lichtwellenleiterstrecke LWL übertragenen optischen Trägersignale in einem optischen Faserverstärker OVₑₛ verstärkt und anschließend durch einen nichtwellenlängenselektiven Teiler in zwei Signalkomponenten aufgeteilt. Aus der einen Signalkomponente wird in einem Empfänger Eₑₛ das Zusatzsignal (ZS) niedriger Bitrate zurückgewonnen, indem das Signal opto-elektrisch gewandelt und vom Nutzsignal (NS), das wegen der hohen Bitrate nur relativ hochfrequente Signalanteile aufweist, z.B. durch ein elektrisches Tiefpaßfilter abgetrennt wird. Aus der anderen Signalkomponente wird in einer Empfangsanordnung EA das Nutzsignal (NS) gewonnen, indem durch ein schmalbandiges optisches Filter, das auf das optische Trägersignal des Nutzsignals (NS) abgestimmt ist, dieses herausgefiltert und das Trägersignal des Zusatzsignals (ZS) abgeschwächt wird. Das optisch breitbandige Trägersignal des Zusatzsignals (ZS) erscheint aufgrund seiner geringen spektralen Dichte nach dem optischen Filter nur noch als geringer rauschartiger Beitrag auf dem schmalbandigen Trägersignal des Nutzsignals (NS) (siehe auch Fig. 3 und zugehörige Beschreibung).

Mit Hilfe des Zusatzsignals (ZS) kann das optische Nachrichtenübertragungssystem gesteuert und überwacht werden, insbesondere die Zwischenverstärker ZV₁ bis ZVₙ, die optische Faserverstärker OV₁ bis OVₙ enthalten. Die Wellenlängen des optisch schmalbandigen als auch die des optisch breitbandigen Signals (NS und ZS) werden so gewählt, daß sie im wesentlichen innerhalb des Verstärkungsbereichs der optischen Faserverstärker OVₛₛ, OV₁, ... OVₙ und OVₑₛ liegen. Deshalb können mit diesen beide Signale (NS und ZS) verstärkt werden. Die Bandbreite eines Faserverstärkers, der im Wellenlängenbereich um 1550 nm arbeitet, kann z.B. 35 nm, die Linienbreite einer Superluminiszenzdiode z.B. 30 nm oder weniger betragen. Zum Übertragen von Daten mit hoher Bitrate geeignete Halbleiter-Laser besitzen Linienbreiten von kleiner 1 nm.

In dem Zwischenverstärker ZV₁ wird nach dem Faserverstärker OV₁ z.B. durch einen Strahlteiler ein Teil des optischen Signals einem Empfänger E₁ zugeführt, der aus diesem Signalanteil das Trägersignal des Zusatzsignals (ZS) extrahiert. Dies geschieht in der gleichen Weise, wie schon anhand des Empfängers Eₑₛ der Empfangsstation ES beschrieben.

Das Zusatzsignal (ZS) wird in dem Zwischenverstärker ZV₁ regeneriert und zusammen mit Daten des Zwischenverstärkers ZV₁ mittels eines breitbandigen optischen Senders S₁ wieder in die Lichtwellenleiterstrecke LWL vor dem Faserverstärker OV₁ eingekoppelt. Durch diese Anordnung dient der Faserverstärker OV₁ vorteilhafterweise sowohl als empfindlicher Vorverstärker für den Empfänger E₁ als auch als Nachverstärker für den Sender S₁.

Das Zusatzsignal (ZS) wird in einem Zeitmultiplexverfahren gesendet. Hierfür wird in der Sendestation SS ein Pulsrahmen gebildet, und die von dem Sender Sₛₛ gesendeten Daten des Zusatzsignals (ZS) mit niedriger Bitrate werden dem ersten Zeitschlitz zugeordnet. Der Sender Sₛₛ wirkt hierbei als Starter für den Pulsrahmen. Ein beispielhafter Pulsrahmen ist in der Figur 2 dargestellt. Er ist in (n+1) Zeitschlitze eingeteilt, wobei der Sendestation SS (Fig. 1) der erste Zeitschlitz S und den Zwischenverstärkern ZV₁ bis ZVₙ jeweils einer der Zeitschlitze V₁ bis Vₙ zugeordnet wird.

Der Empfänger E₁ des Zwischenverstärkers ZV₁ empfängt auch das einen vergleichsweise hohen Pegel aufweisende Trägersignal des eigenen Senders S₁, da der Sender S₁ vor und Empfänger E₁ hinter dem optischen Faserverstärker OV₁ angekoppelt ist (siehe Fig. 1). Der Empfänger E₁ muß deshalb für den Zeitraum dieses Zeitschlitzes ausgetastet oder zumindest in seiner Empfindlichkeit heruntergetastet werden. Im letzteren Fall kann eine automatische Verstärkungsregelung des optischen Faserverstärkers OV₁ erfolgen, indem eine Regelschleife gebildet wird. Hierfür wird in dem Empfänger E₁ das von dem eigenen Sender S₁ gesendete Zusatzsignal (ZS) detektiert und als Regelsignal für die Verstärkung des Faserverstärkers OV₁ verwendet. Mit einer entsprechenden automatischen Verstärkungsregelung können natürlich auch die weiteren Zwischenverstärker ZV₂ bis ZVₙ mittels des jeweiligen Empfängers E₂ bis Eₙ im jeweiligen Zeitschlitz geregelt werden.

Das von den Sendern S₁ bis Sₙ emittierte breitbandige Trägersignal des Zusatzsignals (ZS) muß in den nachfolgenden Zwischenverstärkern nicht ausgeblendet werden, sondern kann ohne Störung der Übertragung in der Lichtwellenleiterstrecke LWL weiterlaufen. Die übertragbare Bitrate wird allerdings durch die Anzahl der Zwischenverstärker ZV₁ bis ZVₙ eingeschränkt, da diese die Gesamtzahl der Zeitschlitze bestimmen und die Summe aller zusätzlichen Daten mit niedriger Bitrate in einem Zeitschlitz übertragen werden muß.

Das Zeitmultiplex-Verfahren kann in an sich bekannter Weise zum Lokalisieren einer Streckenunterbrechung oder Störung im optischen Nachrichtenübertragungssystem verwendet werden. Dies wird bewirkt, indem ein Zwischenverstärker einen neuen Pulsrahmen mit einem Zusatzsignal (ZS) erzeugt, wenn sein Empfänger kein Zusatzsignal (ZS) mehr empfängt. Aus diesem neuen Zusatzsignal (ZS) läßt sich bestimmen, ab welchem Zwischenverstärker die Wellenleiterstrecke noch arbeitet.

Es gibt weitere Möglichkeiten, den Sender S₁ und den Empfänger E₁ im Zwischenverstärker ZV₁ anzuordnen, z.B. kann der Empfänger E₁ vor dem Sender S₁ angeordnet sein. Auf diese Weise wird vermieden, daß der Empfänger E₁ das einen hohen Pegel aufweisende Signal des Senders S₁ sieht. In diesem Fall kann der optische Faserverstärker OV₁ aber nicht mehr als Vorverstärker für den Empfänger E₁ genutzt werden.

Das Nachrichtenübertragungsverfahren kann auch auf optische Nachrichtenübertragungssysteme mit mehreren Nutzkanälen, jeder mit einem schmalbandigen optischen Trägersignal zum Übertragen eines Nutzsignales (NS) hoher Bitrate, angewendet werden. Alle optisch schmalbandigen Trägersignale müssen dabei im nutzbaren Verstärkungsbereich der optischen Faserverstärker liegen. Anhand der Figur 3, in der in einem Diagramm die Intensität I gegenüber der Wellenlänge λ aufgetragen ist, wird ein beispielhaftes WDM(Wavelength Division Multiplex)-System erläutert. Es enthält drei optisch schmalbandige Trägersignale L1, L2 und L3 mit geringfügig unterschiedlichen Wellenlängen, die z.B. durch Laserdioden erzeugt werden, und ein optisch breitbandiges Zusatzsignal SLD, durch das zusätzliche Daten mit niedriger Bitrate übertragen werden. Das breitbandige Signal SLD wird auch hier z.B. durch eine Superluminiszenzdiode erzeugt; sein Wellenlängenbereich überlappt sich mit denen der optisch schmalbandigen Trägersignale L1, L2 und L3, ist aber in seiner spektralen Intensität vergleichsweise gering.

Die vier optischen Signale L1, L2, L3 und SLD können in einem Empfänger, wie schon vorangehend beschrieben, voneinander separiert werden. Die Signale L1, L2 und L3 werden dabei durch schmalbandige optische Filter, die auf die betreffenden Wellenlängen abgestimmt sind, selektiert. Die Signale L1, L2 und L3 können in einer Sendestation oder in unterschiedlichen Sendestationen erzeugt werden.

In einer anderen Ausgestaltung wird das Zusatzsignal (ZS) im Zeitmultiplex über ein optisch schmalbandiges Trägersignal, das z.B. ebenfalls von einem Halbleiterlaser erzeugt wird, übertragen. Das Zusatzsignal (ZS) muß dann durch ein optisches Filter von dem Nutzsignal (NS) separiert werden.

## Patentansprüche

1. Optisches Nachrichtenübertragungsverfahren zum Übertragen von mindestens einem Nutzsignal (NS) mit hoher Bitrate über einen Lichtwellenleiter mit mindestens einer Sendestation, die einen optischen Sender zum Übertragen von mindestens einem Zusatzsignal (ZS) mit niedriger Bitrate enthält, und mit mindestens einem Zwischenverstärker, der einen optischen Verstärker und je einen optischen Empfänger und Sender zum Empfangen und Senden des Zusatzsignals (ZS) aufweist, dadurch gekennzeichnet, daß das Zusatzsignal (ZS) mittels eines optischen Trägersignals in einem Zeitmultiplexverfahren derart übertragen wird, daß die Informationen einzelner Zwischenverstärker (ZV₁ bis ZVₙ) getrennt behandelt werden.

2. Optisches Nachrichtenübertragungsverfahren nach Anspruch 1, dadurch gekennzeichnet, daß jedem Zwischenverstärker (ZV₁ bis ZVₙ) ein spezifischer Zeitschlitz (V₁ bis Vₙ) zur Übertragung des Zusatzsignals (ZS) zugeordnet wird.

3. Optisches Nachrichtenübertragungsverfahren nach Anspruch 1 oder 2, dadurch gekennzeichnet, daß durch das Zeitmultiplexverfahren gegenseitige Störungen von optischen Trägersignalen verschiedener Zwischenverstärker (ZV₁ bis ZVₙ) auch ohne Verwendung aufwendiger optischer Filter vermieden werden.

4. Optisches Nachrichtenübertragungsverfahren nach Anspruch 1, 2 oder 3, dadurch gekennzeichnet, daß durch den in der Sendestation (SS) angeordneten optischen Sender (Sₛₛ) für das Zusatzsignal (ZS) ein zeitlicher Rahmen gebildet wird, und daß im ersten Zeitschlitz (S) dieses Rahmens das Zusatzsignal (ZS) der Sendestation (SS) eingelagert wird.

5. Optisches Nachrichtenübertragungsverfahren nach Anspruch 4, dadurch gekennzeichnet, daß das Zusatzsignal (ZS) in einem Zwischenverstärker (ZV₁ bis ZVₙ) empfangen, gewandelt, regeneriert und zusammen mit eigenen Daten in dem diesem Zwischenverstärker (ZV₁ bis ZVₙ) zugeordneten Zeitschlitz (V₁ bis Vₙ) ausgesendet wird.

6. Optisches Nachrichtenübertragungsverfahren nach einem der Ansprüche 2, 3, 4 oder 5, dadurch gekennzeichnet, daß in einem optischen Zwischenverstärker (ZV₁ bis ZVₙ), wenn er kein Zusatzsignal (ZS) empfängt, z.B. bei einer Streckenunterbrechung, für das Zusatzsignal (ZS) ein zeitlicher Rahmen gebildet wird und im ersten Zeitschlitz des Rahmens das Zusatzsignal dieses Zwischenverstärkers (ZV₁ bis ZVₙ) eingelagert wird.

7. Optisches Nachrichtenübertragungsverfahren nach einem der Ansprüche 1 bis 6, dadurch gekennzeichnet, daß die optischen Sender (Sₛₛ, S₁ bis Sₙ) zum Übertragen des Zusatzsignales ein im Vergleich zu der Bandbreite des Trägersignals für die Nutzsignale (NS) breitbandiges optisches Trägersignal emittieren.

8. Optisches Nachrichtenübertragungsverfahren nach Anspruch 7, dadurch gekennzeichnet, daß das breitbandige optische Trägersignal von einer Luminiszenzdiode emittiert wird.

9. Optisches Nachrichtenübertragungsverfahren nach Anspruch 7 oder 8, dadurch gekennzeichnet, daß das breitbandige und das schmalbandige optische Trägersignal im Verstärkungsbereich des optischen Verstärkers (OV₁ bis OVₙ) liegen.

10. Optisches Nachrichtenübertragungsverfahren nach einem der Ansprüche 1 bis 6, dadurch gekennzeichnet, daß die optischen Sender (Sₛₛ, S₁ bis Sₙ) ein schmalbandiges optisches Trägersignal zum Übertragen des Zusatzsignals (ZS) emittieren, das z.B. durch einen Halbleiterlaser erzeugt

11. Zwischenverstärker mit einem optischen Verstärker und mit je einem optischen Empfänger und Sender zum Empfangen und Senden eines Zusatzsignals (ZS) mit niedriger Bitrate, dadurch gekennzeichnet, daß in dem Zwischenverstärker (ZV₁ bis ZVₙ) der optische Sender (S₁ bis Sₙ) zum Senden des Zusatzsignals (ZS) vor und der optische Empfänger (E₁ bis Eₙ) zum Empfangen des Zusatzsignals (ZS) hinter dem optischen Verstärker (OV₁ bis OVₙ) angeordnet ist.

12. Zwischenverstärker nach Anspruch 11, dadurch gekennzeichnet, daß der optische Empfänger (E₁ bis Eₙ) dieses Zwischenverstärkers (ZV₁ bis ZVₙ) das Zusatzsignal (ZS) des eigenen Senders (S₁ bis Sₙ) empfängt und zur Verstärkungsregelung seines optischen Verstärkers (OV₁ bis OVₙ) nutzt.

13. Zwischenverstärker mit einem optischen Verstärker und mit je einem optischen Empfänger und Sender zum Empfangen und Senden eines Zusatzsignals (ZS) mit niedriger Bitrate, dadurch gekennzeichnet, daß in dem Zwischenverstärker (ZV₁ bis ZVₙ) der optische Sender (S₁ bis Sₙ) zum Senden des Zusatzsignals (ZS)und der optische Empfänger (E₁ bis Eₙ) zum Empfangen des Zusatzsignals (ZS) vor dem optischen Verstärker (OV₁ bis OVₙ) angeordnet sind.

14. Zwischenverstärker mit einem optischen Verstärker und mit je einem optischen Empfänger und Sender zum Empfangen und Senden eines Zusatzsignals (ZS) mit niedriger Bitrate, dadurch gekennzeichnet, daß in dem Zwischenverstärker (ZV₁ bis ZVₙ) der optische Sender (S₁ bis Sₙ) zum Senden des Zusatzsignals (ZS) und der optische Empfänger (E₁ bis Eₙ) zum Empfangen des Zusatzsignals (ZS) hinter dem optischen Verstärker (OV₁ bis OVₙ) angeordnet sind.

## Claims

1. Optical communication method for transmitting at least one useful signal (NS) with a high bit rate via an optical fibre, having at least one transmitter station which includes an optical transmitter for transmitting at least one additional signal (ZS) with a low bit rate, and having at least one repeater which has an optical amplifier and one optical receiver and transmitter each for receiving and transmitting the additional signal (ZS), characterized in that the additional signal (ZS) is transmitted by means of an optical carrier signal in a time-division multiplexing method in such a way that the information items of individual repeaters (ZV₁ to ZVₙ) are treated separately.

2. Optical communication method according to Claim 1, characterized in that each repeater (ZV₁ to ZVₙ) is assigned a specific channel (V₁ to Vₙ) for transmitting the additional signal (ZS).

3. Optical communication method according to Claim 1 or 2, characterized in that mutual interference between optical carrier signals of different repeaters (ZV₁ to ZVₙ) is avoided by the time-division multiplexing method even without the use of expensive optical filters.

4. Optical communication method according to Claim 1, 2 or 3, characterized in that a time frame is formed for the additional signal (ZS) by the optical transmitter (Sₛₛ) arranged in the transmitter station (SS), and in that the additional signal (ZS) of the transmitter station (SS) is stored in the first channel (S) of said frame.

5. Optical communication method according to Claim 4, characterized in that the additional signal (ZS) is received, converted and regenerated in a repeater (ZV₁ to ZVₙ) and transmitted together with dedicated data in the channel (V₁ to Vₙ) assigned to said repeater (ZV₁ to ZVₙ).

6. Optical communication method according to one of Claims 2, 3, 4 or 5, characterized in that when an optical repeater (ZV₁ to ZVₙ) receives no additional signal (ZS), for example in the case of an interruption of the link, a time frame is formed in said optical repeater for the additional signal (ZS) and the additional signal of this repeater (ZV₁ to ZVₙ) is stored in the first channel of the frame.

7. Optical communication method according to one of Claims 1 to 6, characterized in that for the purpose of transmitting the additional signal the optical transmitters (S_{SS}, S₁ to Sₙ) emit an optical carrier signal which is a broadband one by comparison with the bandwidth of the carrier signal for the useful signals (NS).

8. Optical communication method according to Claim 7. characterized in that the broadband optical carrier signal is emitted by a light-emitting diode.

9. Optical communication method according to Claim 7 or 8, characterized in that the broadband and the narrowband optical carrier signals are in the amplification range of the optical amplifier (OV₁ to OVₙ).

10. Optical communication method according to one of Claims 1 to 6, characterized in that the optical transmitters (S_{SS}, S₁ to Sₙ) emit for the purpose of transmitting the additional signal (ZS) a narrowband optical carrier signal which is generated, for example, by a semiconductor laser.

11. Repeater having an optical amplifier and one optical receiver and transmitter each for receiving and transmitting an additional signal (ZS) with a low bit rate, characterized in that in the repeater (ZV₁ to ZVₙ) the optical transmitter (S₁ to Sₙ) for transmitting the additional signal (ZS) is arranged upstream of, and the optical receiver (E₁ to Eₙ) for receiving the additional signal (ZS) is arranged downstream of the optical amplifier (OV₁ to OVₙ).

12. Repeater according to Claim 11, characterized in that the optical receiver (E₁ to Eₙ) of said repeater (ZV₁ to ZVₙ) receives the additional signal (ZS) of the dedicated transmitter (S₁ to Sₙ) and uses it to control the amplification of its optical amplifier (OV₁ to OVₙ).

13. Repeater having an optical amplifier and one optical receiver and transmitter each for receiving and transmitting an additional signal (ZS) with a low bit rate, characterized in that in the repeater (ZV₁ to ZVₙ) the optical transmitter (S₁ to Sₙ) for transmitting the additional signal (ZS) and the optical receiver (E₁ to Eₙ) for receiving the additional signal (ZS) are arranged upstream of the optical amplifier (OV₁ to OVₙ).

14. Repeater having an optical amplifier and one optical receiver and transmitter each for receiving and transmitting an additional signal (ZS) with a low bit rate, characterized in that in the repeater (ZV₁ to ZVₙ) the optical transmitter (S₁ to Sₙ) for transmitting the additional signal (ZS) and the optical receiver (E₁ to Eₙ) for receiving the additional signal (ZS) are arranged downstream of the optical amplifier (OV₁ to OVₙ).

## Revendications

1. Procédé de transmission optique d'information pour transmettre au moins un signal utile (NS) avec un débit de bits élevé par un guide d'ondes optiques, comprenant au moins un émetteur équipé d'un émetteur optique pour transmettre au moins un signal complémentaire (ZS) à un débit de bits plus faible et au moins un amplificateur intermédiaire comportant un amplificateur optique et chaque fois un récepteur et un émetteur optique pour recevoir et émettre le signal complémentaire (ZS),
caractérisé en ce que
le signal complémentaire (ZS) est transmis par un signal porteur optique selon un procédé de multiplexage dans le temps de façon à traiter séparément les informations des différents amplificateurs intermédiaires (ZV₁, ZVₙ).

2. Procédé de transmission optique d'information selon la revendication 1,
caractérisé en ce qu'
une fenêtre de temps caractéristique (V₁...Vₙ) est associée à chaque amplificateur intermédiaire (ZV₁, ZVₙ) pour transmettre le signal complémentaire (ZS).

3. Procédé de transmission optique d'information selon la revendication 1 ou 2,
caractérisé en ce que
par le procédé de multiplexage dans le temps, on évite les perturbations réciproques des signaux porteurs optiques de différents amplificateurs intermédiaires (ZV₁, ZVₙ) même sans utiliser de filtres optiques compliqués.

4. Procédé de transmission optique d'information selon les revendications 1, 2 ou 3,
caractérisé en ce que
l'émetteur optique (Sₛₛ) de l'émetteur (SS) forme un cadre de temps pour le signal complémentaire (ZS) et dans la première fenêtre de temps (S) de ce cadre, on insert le signal complémentaire (ZS) de l'émetteur (SS).

5. Procédé de transmission optique d'information selon la revendication 4,
caractérisé en ce que
le signal complémentaire (ZS) reçu par un amplificateur intermédiaire (ZV₁, ZVₙ) est converti, régénéré et émis avec des données propres dans la fenêtre de temps (V₁, Vₙ) associée à cet amplificateur intermédiaire (ZV₁, ZVₙ).

6. Procédé de transmission optique d'information selon l'une quelconque des revendications 2, 3, 4 ou 5,
caractérisé en ce qu'
un amplificateur intermédiaire optique (ZV₁, ZVₙ) qui ne reçoit pas de signal complémentaire (ZS), par exemple en cas de coupure de ligne, forme un cadre supplémentaire pour le signal complémentaire (ZS) et insère dans la première fenêtre de temps de ce cadre, le signal complémentaire de cet amplificateur intermédiaire (ZV₁, ZVₙ).

7. Procédé de transmission optique d'information selon l'une quelconque des revendications 1 à 6,
caractérisé en ce que
les émetteurs optiques (Sₛₛ, S₁, Sₙ) émettent pour la transmission du signal complémentaire, un signal porteur optique à bande large en comparaison à la bande du signal porteur du signal utile (NS).

8. Procédé de transmission optique d'information selon la revendication 7,
caractérisé en ce que
le signal porteur optique à bande large est fourni par une diode électroluminescente.

9. Procédé de transmission optique d'information selon les revendications 7 ou 8,
caractérisé en ce que
le signal optique à bande large et celui à bande étroite se situe dans une plage d'amplification de l'amplificateur optique (OV₁, OVₙ).

10. Procédé de transmission optique d'information selon les revendications 1 à 6,
caractérisé en ce que
les émetteurs optiques (Sₛₛ, S₁, Sₙ) émettent un signal porteur optique à bande étroite pour transmettre le signal complémentaire (ZS) généré par exemple par un laser à semiconducteur.

11. Amplificateur intermédiaire (répéteur) comprenant un amplificateur optique et chaque fois un récepteur et un émetteur optique pour recevoir et émettre un signal complémentaire (ZS) avec un débit de bits faible,
caractérisé en ce que
dans l'amplificateur intermédiaire (ZV₁, ZVₙ), l'émetteur optique (S₁, Sₙ) pour émettre le signal complémentaire (ZS) est prévu avant l'amplificateur optique (OV₁, Ovₙ) et le récepteur optique (E₁, Eₙ) recevant le signal complémentaire (ZS) est prévu derrière l'amplificateur optique (OV₁, OVₙ).

12. Procédé de transmission optique d'information selon la revendication 11,
caractérisé en ce que
le récepteur optique (E₁, Eₙ) de cet amplificateur intermédiaire (ZV₁, ZVₙ) reçoit le signal complémentaire (ZS) de l'émetteur propre (S₁, Sₙ) et l'utilise pour réguler l'amplification de son amplificateur optique (OV₁, OVₙ).

13. Amplificateur intermédiaire comprenant un amplificateur optique et chaque fois un récepteur optique et un émetteur optique pour recevoir et émettre un signal complémentaire (ZS) à débit de bits faible,
caractérisé en ce que
dans l'amplificateur intermédiaire (ZV₁, ZVₙ), l'émetteur optique (S₁, Sₙ) pour émettre le signal complémentaire (ZS) et le récepteur optique (E₁, Eₙ) pour recevoir le signal complémentaire (ZS) sont prévus avant l'amplificateur optique (OV₁, OVₙ).

14. Amplificateur intermédiaire comprenant un amplificateur optique et chaque fois un récepteur et un émetteur optiques pour recevoir et émettre un signal complémentaire (ZS) avec un débit de bits faible,
caractérisé en ce que
dans l'amplificateur intermédiaire (ZV₁, ZVₙ), l'émetteur optique (S₁, Sₙ) pour émettre le signal complémentaire (ZS) et le récepteur optique (E₁, Eₙ) pour recevoir le signal complémentaire (ZS) se trouvent derrière l'amplificateur optique (OV₁, OVₙ).
